# EUROPEAN PATENT APPLICATION

(11) **EP 4 637 049 A1**
(43) Date of publication of application: **22.10.2025**
(21) Application number: 23914098.1
(22) Date of filing: 06.01.2023
(51) Int. Cl.: H04B 10/071

(54) **OPTICAL FIBER DETECTION ASSEMBLY, ADAPTER APPARATUS, AND OPTICAL FIBER DETECTION SYSTEM**

(71) Applicant: Huawei Technologies Co., Ltd., Shenzhen, Guangdong 518129 (CN)
(72) Inventor: WANG, Shanshan, Shenzhen, Guangdong 518129 (CN); FENG, Jia, Shenzhen, Guangdong 518129 (CN); MA, Ning, Shenzhen, Guangdong 518129 (CN)
(74) Representative: Goddar, Heinz J.
(86) International application number: PCT/CN2023/071108
(87) International publication number: WO 2024/145941

(57) **Abstract**

An optical fiber detection assembly (30), an adapter, and an optical fiber detection system are provided, and relate to the field of optical fiber communication technologies. No dedicated OTDR is required, so that a limitation of a detection capability of the OTDR on optical fiber detection is avoided. The optical fiber detection assembly (30) includes: an optical fiber line detection component (301), a signal conversion circuit (302), and a first interface (303). The first interface (303) is configured to connect to an external electronic device (20), the optical fiber line detection component (301) is configured to connect to an optical fiber, the optical fiber line detection component (301) is connected to the signal conversion circuit (302), and the signal conversion circuit (302) is connected to the first interface (303).

## Description

### TECHNICAL FIELD

Embodiments of this application relate to the field of mobile communication technologies, and in particular, to an optical fiber detection assembly, an adapter, and an optical fiber detection system.

### BACKGROUND

With development of mobile communication technologies, optical network systems are widely used. In an optical network system, devices are connected to each other through optical fibers, to perform data transmission on optical links provided by the optical fibers.

For example, in a wireless network fronthaul technology, a base station generally includes a baseband unit (baseband unit, BU) and a radio frequency unit (radio unit, RU). The BU and the RU are usually connected to each other through an optical fiber. A network between the BU and the RU is referred to as a fronthaul network. However, there are some exceptions that fiber end faces are loose or contaminated, fibers are cut, and the like, affecting communication quality of the optical links. Therefore, a requirement for determining the exceptions of the optical fibers gradually emerges.

Generally, detection of optical fibers is performed by O&M engineers by using an optical time-domain reflectometer (optical time-domain reflectometer, OTDR). The OTDR is directly connected to the optical fiber for detection, to generate a detection result. It can be learnt that the detection of optical fibers requires a dedicated OTDR. Consequently, the exception detection is subject to a detection capability of the OTDR.

### SUMMARY

Embodiments of this application provide an optical fiber detection assembly, an adapter, and an optical fiber detection system. No dedicated OTDR is required, and therefore optical fiber detection subject to a detection capability of the OTDR is avoided.

According to a first aspect, an optical fiber detection assembly is provided, including: an optical fiber line detection component, a signal conversion circuit, and a first interface. The optical fiber line detection component is configured to connect to an optical fiber, the optical fiber line detection component is connected to the signal conversion circuit, and the signal conversion circuit is connected to the first interface. The first interface is configured to connect to an external electronic device (for example, a local maintenance terminal (local maintenance terminal, LMT) like a mobile phone, a tablet pad, or a personal computer (personal computer, PC)). The optical fiber line detection component is configured to: send a probe optical signal to the optical fiber, and receive a return optical signal output by the optical fiber. Generally, the return optical signal includes an optical signal obtained by reflecting and/or scattering the probe optical signal by the optical fiber. The optical fiber line detection component is configured to output an electrical parameter of the return optical signal to the signal conversion circuit. The signal conversion circuit is configured to: convert the electrical parameter of the return optical signal into a digital signal, and output the digital signal to the first interface.

In this way, in embodiments of this application, the optical fiber detection assembly includes the optical fiber line detection component, the signal conversion circuit, and the first interface. The optical fiber line detection component may output the probe optical signal to the optical fiber, receive the return optical signal generated by the optical fiber, and then generate the electrical parameter of the return optical signal. Then, the signal conversion circuit converts the electrical parameter of the return optical signal into the digital signal, and sends the digital signal to an electronic device through the first interface. In this way, in the optical fiber detection assembly, only the return optical signal of the probe optical signal is detected to generate the digital signal corresponding to the electrical parameter of the return optical signal, and an optical fiber fault is not determined. The optical fiber fault is determined by the electronic device based on the digital signal, that is, functions of an OTDR are separately deconstructed into the light detection assembly and the electronic device provided in embodiments of this application for implementation, so that a function of the optical fiber detection assembly can be simplified. Because no dedicated OTDR is required, a limitation of a detection capability of the OTDR on optical fiber detection is avoided.

In a possible implementation, to simplify a structure of the light detection assembly, the optical fiber line detection component may be implemented by directly reusing an optical module. The optical fiber line detection component includes the optical module. The optical module includes an optical interface and an electrical interface. The optical fiber detection assembly further includes a second interface connected to the signal conversion circuit. The optical interface is configured to connect to the optical fiber. The electrical interface is configured to connect to the signal conversion circuit through the second interface.

In a possible implementation, the optical fiber detection assembly includes an adapter, and the adapter includes the second interface, the signal conversion circuit, and the first interface. In this way, the optical fiber detection assembly may be further deconstructed into a suite including the optical module and the adapter SL.

In a possible implementation, the first interface is connected to the signal conversion circuit through a cable. In this way, the adapter including the second interface, the signal conversion circuit, and the first interface may form a form of an adapter cable, and a length of the cable is not limited. In this way, it is more convenient for an operation and maintenance engineer to connect to the LMT device during use.

In a possible implementation, the second interface includes a small form pluggable (small form pluggable, SFP) interface.

In a possible implementation, the first interface includes a universal serial bus (universal serial bus, USB) interface or a wireless communication interface.

In a possible implementation, to adapt to a case in which optical fibers of different lengths and in different optical fiber modes can generate valid return optical signals after receiving probe optical signals, the optical fiber line detection component is further configured to receive, through the signal conversion circuit, configuration information input by the electronic device from the first interface. The optical fiber line detection component is further configured to control an optical parameter of the probe optical signal based on the configuration information, where the configuration information includes at least one of the following information: a pulse width, a distance, and a pulse coding mode.

In a possible implementation, the optical fiber line detection component is integrated with the signal conversion circuit. For example, the signal conversion circuit may alternatively be directly manufactured in the optical module, so that the electrical interface and the second interface may be omitted.

In a possible implementation, the optical fiber is configured to connect a radio frequency unit RU and a baseband unit BU in an open radio access network ORAN.

According to a second aspect, an adapter is provided, including a first interface, a signal conversion circuit, and a second interface. The signal conversion circuit is connected to the first interface, the first interface is configured to connect to an external electronic device, the second interface is configured to connect to an optical module, for example, the second interface may be an electrical interface connected to the optical module, and an optical interface of the optical module is configured to connect to an optical fiber. The second interface is further connected to the signal conversion circuit. The second interface is configured to receive an electrical parameter of a return optical signal output by the optical module, where the return optical signal is generated by the optical fiber based on a probe optical signal sent by the optical module to the optical fiber. The signal conversion circuit is configured to: convert an electrical parameter of the return optical signal into a digital signal, and output the digital signal to the first interface.

In a possible implementation, the second interface includes an SFP interface.

In a possible implementation, the first interface includes a USB interface or a wireless communication interface.

In a possible implementation, the first interface is connected to the signal conversion circuit through a cable.

In a possible implementation, the signal conversion circuit is further configured to: receive configuration information input by the electronic device from the first interface, and send the configuration information to the optical module. The configuration information is used to control an optical parameter of the probe optical signal output by the optical module, and the configuration information includes at least one of the following information: a pulse width, a distance, and a pulse coding mode.

In a possible implementation, the optical fiber is configured to connect a radio frequency unit RU and a baseband unit BU in an open radio access network ORAN.

According to a third aspect, an optical fiber detection system is provided, including an electronic device and the optical fiber detection assembly according to the first aspect or the possible implementation. The electronic device is configured to: receive a digital signal output by the optical fiber detection assembly, and determine a fault on the optical fiber based on the data signal.

According to a fourth aspect, an optical fiber detection method is provided, applied to an optical fiber detection assembly. The optical fiber detection assembly includes: an optical fiber line detection component, a signal conversion circuit, and a first interface. The optical fiber line detection component is configured to connect to an optical fiber, the optical fiber line detection component is connected to the signal conversion circuit, and the signal conversion circuit is connected to the first interface. The optical fiber detection method includes: sending a probe optical signal to the optical fiber through the optical fiber line detection component, and receiving a return optical signal output by the optical fiber; outputting an electrical parameter of the return optical signal to the signal conversion circuit through the optical fiber line detection component; and converting the electrical parameter of the return optical signal into a digital signal through the signal conversion circuit, and outputting the digital signal to the first interface.

In a possible implementation, the method further includes: receiving configuration information input by the electronic device from the first interface; and controlling, based on the configuration information, an optical parameter of the probe optical signal output by the optical fiber line detection component, where the configuration information includes at least one of the following information: a pulse width, a distance, and a pulse coding mode.

For technical problems that can be resolved in the second aspect and the possible implementations of the second aspect, the third aspect and the fourth aspect, and the possible implementations of the third aspect and the fourth aspect, and implemented technical effect, refer to descriptions in the first aspect and the possible implementations of the first aspect. Details are not described again.

### BRIEF DESCRIPTION OF DRAWINGS

FIG. 1 is a diagram of a communication system according to an embodiment of this application;
FIG. 2 is a diagram of a system architecture according to an embodiment of this application;
FIG. 3 is a principle diagram of Rayleigh backscattering according to an embodiment of this application;
FIG. 4 is a principle diagram of Fresnel reflection according to an embodiment of this application;
FIG. 5 is a diagram of a system architecture according to another embodiment of this application;
FIG. 6 is a diagram of a structure of an OTDR according to an embodiment of this application;
FIG. 7 is a diagram of a structure of an optical fiber detection system according to an embodiment of this application;
FIG. 8 is a diagram of a structure of an optical fiber detection assembly according to an embodiment of this application;
FIG. 9 is a diagram of a structure of an optical fiber detection assembly according to another embodiment of this application;
FIG. 10 is a diagram of a structure of an optical module according to an embodiment of this application;
FIG. 11 is a diagram of pins of a USB interface according to an embodiment of this application;
FIG. 12 is a diagram of pins of an SFP interface according to an embodiment of this application;
FIG. 13 is a diagram of a UI of an optical fiber detection result according to an embodiment of this application; and
FIG. 14 is a diagram of a UI of an optical fiber detection result according to another embodiment of this application.

### DESCRIPTION OF EMBODIMENTS

The following describes the technical solutions in embodiments of this application with reference to the accompanying drawings in embodiments of this application. In embodiments of this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists. A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" do not limit a quantity or an execution sequence.

It should be noted that, in embodiments of this application, the word "exemplary" or "for example" is used to represent giving an example, an illustration, or a description. Any embodiment or design solution described as an "example" or "for example" in this application should not be explained as being more preferred or having more advantages than another embodiment or design solution. To be precise, use of the word like "example" or "for example" is intended to present a relative concept in a specific manner.

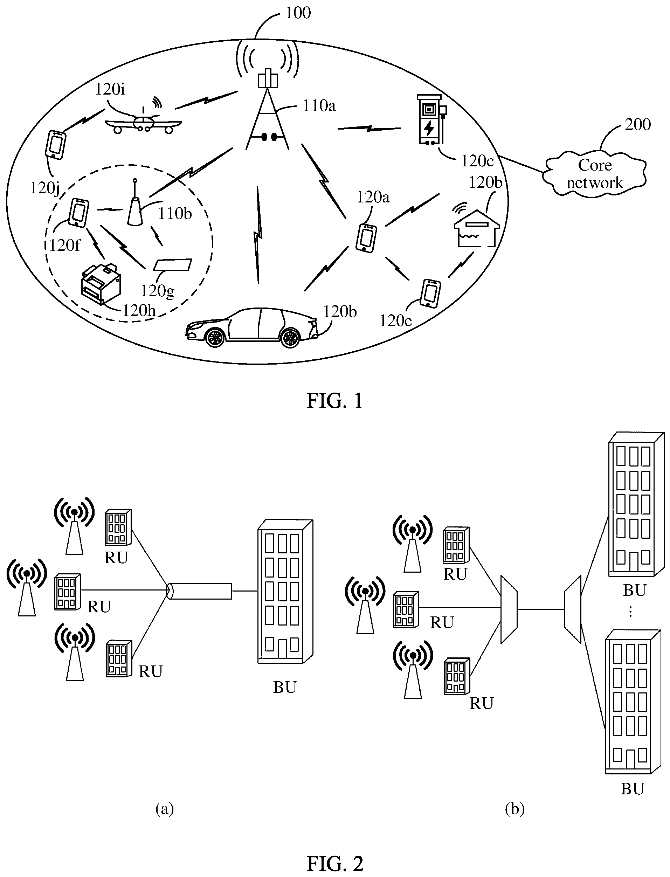

Embodiments of this application may be applied to a diagram of a possible and nonlimiting communication system shown in FIG. 1. As shown in FIG. 1, the communication system includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of a core network and a logical function of a radio access network.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open access network (open RAN, O-RAN, or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The RAN node 110 may also be sometimes referred to as an access network device, an RAN entity, an access node, or the like, and forms a part of the communication system, to help the terminal implement radio access. The plurality of RAN nodes 110 in the communication system may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, NodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, the access network device in a vehicle to everything (vehicle to everything, V2X) technology may be a road side unit (road side unit, RSU).

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand their meanings. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the BU, the RU, the O-CU, the O-DU, and the O-RU are used as examples for description in embodiments of this application.

FIG. 2 is a diagram of a system architecture to which an embodiment of this application is applied. Refer to (a) in FIG. 2. The system architecture includes a BU and a plurality of RUs, and the BU is connected to the plurality of RUs through optical fibers, to perform communication. (b) in FIG. 2 is a diagram of another system architecture according to an embodiment of this application. The system architecture includes a plurality of BUs and a plurality of RUs, and the plurality of BUs are connected to the plurality of RUs through optical fibers, to perform communication. In other words, in embodiments of this application, one BU may be connected to a plurality of RUs, or a plurality of BUs may be connected to a plurality of RUs.

A network between the BU and RU is referred to as a fronthaul network. There are a plurality of networking forms between the BU and the plurality of RUs. In a networking form 1, the BU and the RU communicate with each other in a direct connection manner through an optical fiber. In a networking form 2, the BU communicates with the RU in a passive wavelength division multiplexing (wavelength division multiplexing, WDM) manner. In a networking form 3, the BU communicates with the RU in an active WDM manner or an optical transport network (optical transport network, OTN) manner. In a networking form 4, the BU communicates with the RU through a secret private network (secret private network, SPN). It should be noted that the BU and the RU may support one standard, or may support a plurality of standards.

Regardless of the networking form or standard, a transmission medium, for example, an optical fiber, is required for data transmission between the BU and the RU. However, a cross-sectional surface of the optical fiber may have exceptions such as a loose connection, a dirty end surface, or optical fiber breakage, which affect communication quality of an optical link. Because costs of laying the optical fiber are high, a requirement for determining the exceptions of the optical fiber gradually emerges. The system architecture described in embodiments of this application is intended to describe the technical solutions in embodiments of this application more clearly, and does not constitute a limitation on the technical solutions provided in embodiments of this application. As the system architecture evolves, the technical solutions provided in embodiments of this application are also applicable to a similar technical problem. In other words, the system architecture with the fronthaul network provided in embodiments of this application is merely an example. In another system architecture including two devices connected through an optical fiber, there is also a requirement for determining an exception of the optical fiber.

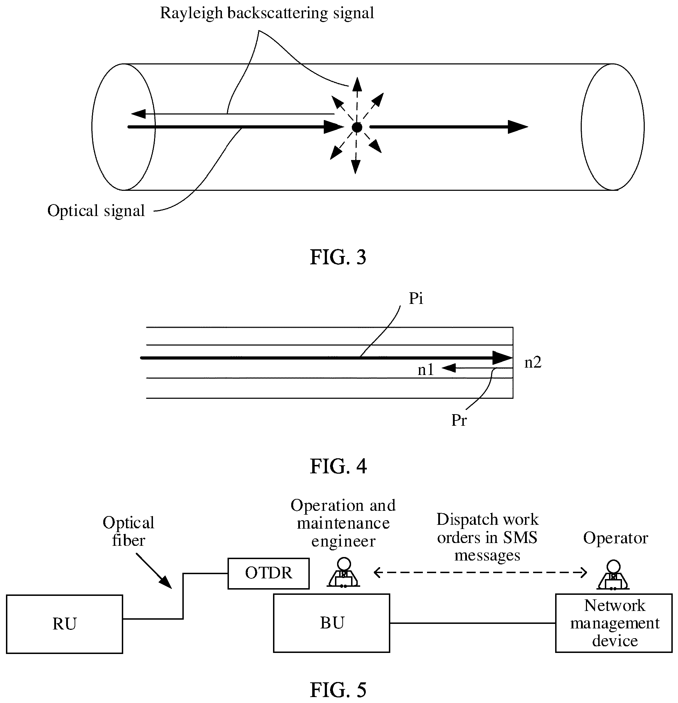

Generally, an optical signal is transmitted in the optical fiber in a plurality of manners such as Rayleigh backscattering (Rayleigh backscattering) and Fresnel reflection. If density of a material of the optical fiber is uneven, doping components are uneven, or the optical fiber is defective, Rayleigh backscattering (as shown in FIG. 3) is generated at each point in a length direction of the optical fiber when the optical signal is transmitted in the optical fiber, to form a Rayleigh backscattering signal (scattered light). Specifically, when a particle size of the material is far less than a wavelength of incident light (less than one tenth of the wavelength), the Rayleigh backscattering signal generated in the optical fiber is transmitted in various directions, and strength of the scattered light in each direction is different. The strength is in direct proportion to a fourth power of a frequency of the incident light. In this scenario, Rayleigh backscattering is irregular scattering generated by an optical signal transmitted in the optical fiber. In normal cases, the optical fiber is attenuated due to Rayleigh backscattering, and signal strength of the optical signal forms a downward curve. Generally, an OTDR detects a backward Rayleigh backscattering signal to determine whether the optical fiber is abnormal. In addition, Fresnel reflection of a signal occurs in a case, for example, at a boundary of two transmission media with different refractive indexes (for example, the boundary may be a joint of a connector, a mechanical connection, a break, or an optical fiber termination). As shown in FIG. 4, a refractive index of a core layer of the optical fiber is n1, and a refractive index of a medium that contacts with the core layer at one end of the optical fiber is n2. In this case, Fresnel reflection occurs on an optical signal Pi transmitted through the optical fiber at the end, to form a reflected optical signal Pr. The OTDR may also detect the reflected optical signal Pr to determine whether the optical fiber is abnormal.

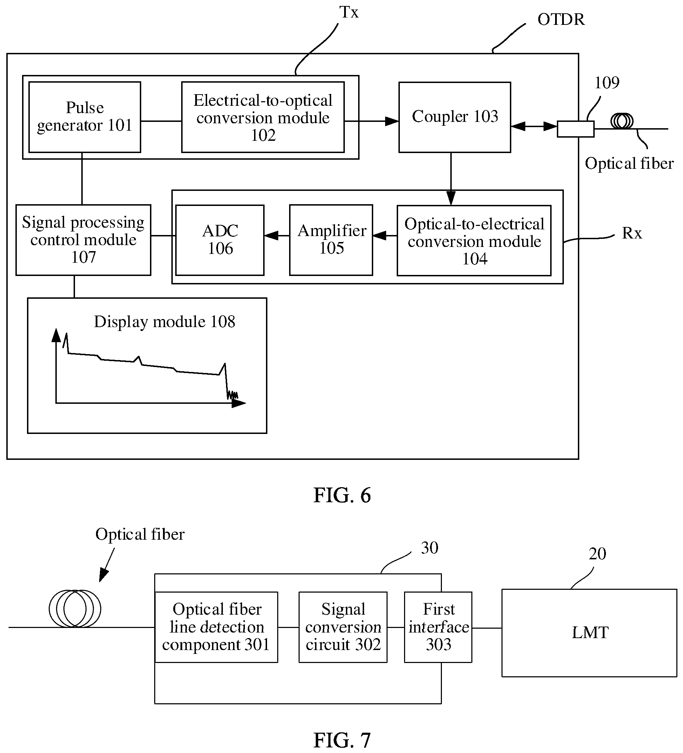

With reference to FIG. 5, when a user plane or control plane service of an O-CU/O-DU of a BU of a base station is faulty, or a connection with an O-RU is faulty, alarm information is generated on a network management device of an operator, an on-site work order is dispatched to an operation and maintenance engineer by the network management device through an SMS message, and the operation and maintenance engineer needs to hold the OTDR to access the optical fiber, to accurately learn a specific problem and determine a loss, a fault, and the like of the optical fiber. FIG. 6 shows a partial circuit structure of an OTDR. A transmit module Tx in the OTDR includes a pulse generator 101 (also referred to as a driver) and an electrical-to-optical conversion module 102. The pulse generator 101 may include two controllable current sources, which are respectively a bias current source and a modulation current source. The electrical-to-optical conversion module 102 may include one electrical-to-optical element (which may be generally a device like a laser or a light emitting diode). The two controllable current sources jointly drive the electrical-to-optical element (with a function of converting an electrical signal into an optical signal), convert a driving current into a corresponding optical signal (a probe optical signal or a transmit optical signal), and transmit the probe optical signal to the optical fiber through a coupler 103 and an optical fiber interface 109. When the probe optical signal is transmitted in the optical fiber, a return optical signal formed by Rayleigh backscattering or Fresnel reflection is received by a receiving module Rx in the OTDR. As shown in FIG. 6, the receiving module Rx includes an optical-to-electrical conversion module 104, an amplifier 105, and an analog-to-digital converter (analog-to-digital converter, ADC) 106. The optical-to-electrical conversion module 104 may include an avalanche photodiode (avalanche photodiode, APD). In this way, the APD may convert the return optical signal into an electrical signal. The APD is connected to the amplifier 105, and the amplifier 105 may amplify the electrical signal at the APD, and provide an amplified signal to the ADC 106. The ADC 106 needs to perform real-time sampling on the signal output by the amplifier, provide the sampled signal to a signal processing control module 107, and store the sampled signal in the memory, to generate a signal strength curve, and control a display module 108 to display the strength curve (where a vertical axis of the strength curve may be power (strength) of the return optical signal, and a horizontal axis may be time). In addition, the signal processing control module 107 may further control the pulse generator 101 to adjust a parameter of the probe optical signal output by the electrical-to-optical conversion module 102. For example, the signal processing control module 107 may obtain configuration information input by a user, where the configuration information may include at least one of the following information: a pulse width, a distance, and a pulse coding mode. The pulse generator 101 is controlled based on the configuration information to adjust the probe optical signal output by the electrical-to-optical conversion module 102, so that valid return optical signals can be generated in the optical fiber for probe optical signals in different optical fiber modes and lengths, to ensure accuracy of optical fiber detection. The signal processing control module 107 may include a central processing unit (central processing unit, CPU), a microprocessor (microcontroller unit, MCU), a field programmable gate array (field programmable gate array, FPGA), and the like. It can be seen that, the OTDR has a complex structure, is limited by a capability of the signal processing control module 107, and can detect a limited quantity of faults of the optical fiber. In addition, because the operation and maintenance engineer needs to carry the OTDR instrument to perform on-site detection when an optical path is faulty, a large amount of test instrument costs and personnel learning costs are caused.

In view of this, embodiments of this application provide an optical fiber detection system, and functions of an OTDR are separately deconstructed into a light detection assembly and an electronic device provided in embodiments of this application for implementation, so that functions of the optical fiber detection assembly can be simplified. Because no dedicated OTDR is required, a limitation of a detection capability of the OTDR on optical fiber detection is avoided. Refer to FIG. 7, an electronic device 20 and an optical fiber detection assembly 30 are included. The optical fiber detection assembly 30 is configured to: send a probe optical signal to an optical fiber, and receive a return optical signal output by the optical fiber. The return optical signal includes an optical signal obtained by reflecting (which may be Fresnel reflection) and/or scattering (which may be Rayleigh backscattering) the probe optical signal by the optical fiber. An electrical parameter of the return optical signal is converted into a digital signal. The electronic device 20 is configured to: receive the digital signal output by the optical fiber detection assembly 30, and determine a fault of the optical fiber based on the data signal. The electronic device 20 may be a local maintenance terminal LMT like a mobile phone, a tablet computer PAD, or a portable computer. This is not limited in embodiments of this application.

Specifically, refer to FIG. 7. The optical fiber detection assembly 30 is provided, including: an optical fiber line detection component 301, a signal conversion circuit 302, and a first interface 303. The optical fiber line detection component 301 is configured to connect to an optical fiber, the optical fiber line detection component 301 is connected to the signal conversion circuit 302, and the signal conversion circuit 302 is connected to the first interface 303. The first interface 303 is configured to connect to an external electronic device. The optical fiber line detection component 301 may include an optical fiber detection circuit that uses a Fresnel reflection principle and a Rayleigh backscattering principle, for example, may include at least the transmitting module Tx and the receiving module Rx shown in FIG. 6. The signal conversion circuit 302 may be configured to: convert a signal output by the optical fiber line detection component 301 into a digital signal, for example, convert an electrical parameter of a return optical signal output by the receiving module Rx into a binary data format (for example, 01001100011101011010). The first interface 303 may be a digital interface configured to transmit the digital signal, for example, may include a universal serial bus (universal serial bus, USB) interface, or a wireless communication interface, where the USB interface includes but is not limited to a USB 1.0, a USB 2.0, a USB 3.0, a USB 4.0, and a type-C interface. The wireless communication interface includes but is not limited to an interface that supports a wireless communication solution like a wireless local area network (wireless local area network, WLAN)(for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field wireless communication (near field communication, NFC) technology, and an infrared (infrared, IR) technology.

In this way, the optical fiber line detection component 301 is configured to: send a probe optical signal to the optical fiber, and receive a return optical signal output by the optical fiber, where the return optical signal includes an optical signal obtained by reflecting and/or scattering the probe optical signal by the optical fiber. The optical fiber line detection component 301 is configured to output an electrical parameter of the return optical signal to the signal conversion circuit. The signal conversion circuit 302 is configured to: convert the electrical parameter of the return optical signal into a digital signal, and output the digital signal to the first interface 303.

After the digital signal is transmitted to the LMT, the LMT implements, based on the digital signal provided by the optical fiber detection assembly, fronthaul optical fiber line sensing like a reflection point and an abnormal loss point location by using an algorithm like a noise reduction algorithm and a sensing enhancement algorithm, and can identify time based on empirical data and determine a specific abnormal event (for example, optical fiber breakage, cross-sectional area contamination, and optical device aging). Finally, graphical display of fronthaul optical fiber line quality is implemented through a user interface (user interface, UI) of the LMT.

In embodiments of this application, the optical fiber detection assembly 30 includes the optical fiber line detection component 301, the signal conversion circuit 302, and the first interface 303. The optical fiber line detection component may output the probe optical signal to the optical fiber, receive the return optical signal generated by the optical fiber, and then generate the electrical parameter of the return optical signal. Then, the signal conversion circuit converts the electrical parameter of the return optical signal into the digital signal, and sends the digital signal to an electronic device through the first interface. In this way, in the optical fiber detection assembly, only the return optical signal of the probe optical signal is detected to generate the digital signal corresponding to the electrical parameter of the return optical signal, and an optical fiber fault is not determined. The optical fiber fault is determined by the electronic device based on the digital signal, that is, functions of an OTDR are separately deconstructed into the light detection assembly and the electronic device provided in embodiments of this application for implementation, so that a function of the optical fiber detection assembly can be simplified. Because no dedicated OTDR is required, a limitation of a detection capability of the OTDR on optical fiber detection is avoided.

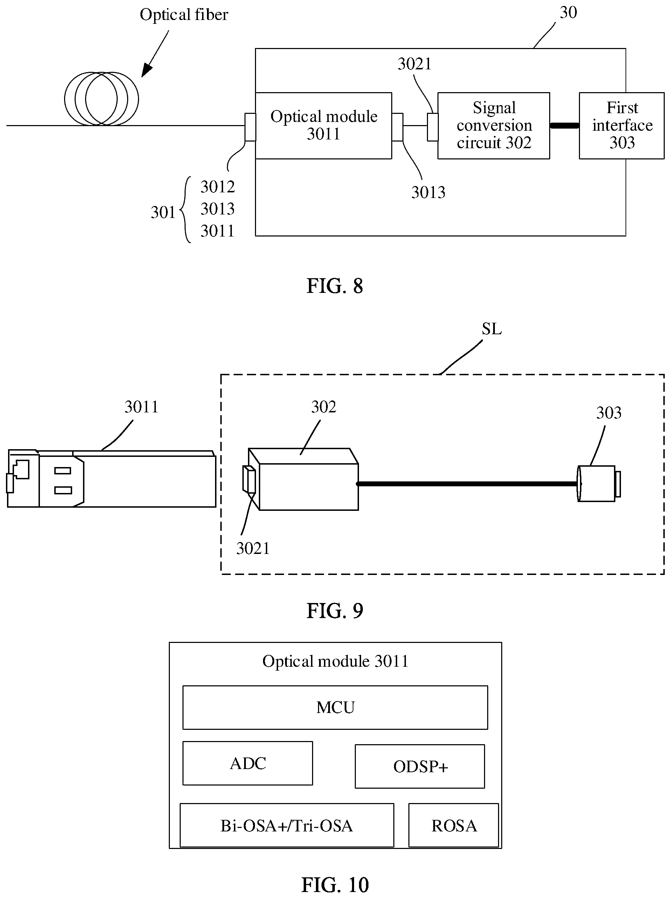

In addition, refer to FIG. 8. To simplify a structure of the light detection assembly, the optical fiber line detection component 301 may be implemented by directly reusing a conventional optical module 3011. For example, the optical fiber line detection component 301 includes the optical module 3011. The optical fiber detection assembly 30 further includes a second interface 3021 connected to the signal conversion circuit 302. The second interface 3021 is configured to connect to the optical module 3011. Generally, the optical module 3011 includes an optical interface 3012 and an electrical interface 3013, and the electrical interface 3013 of the optical module 3011 includes a small form pluggable (small form pluggable, SFP) interface. To connect the optical module 3011 and the second interface 3021, the second interface 3021 also includes an SFP interface, where the electrical interface 3013 of the optical module 3011 may be a male interface, and the second interface may be a female interface. The optical interface 3012 of the optical module 3011 is configured to connect to the optical fiber, and the electrical interface 3013 is configured to connect to the signal conversion circuit 302 through the second interface 3021. In this way, refer to FIG. 9. The optical fiber detection assembly 30 may be further deconstructed into a suite including the optical module 3011 and an adapter SL, and the adapter SL includes the second interface 3021, the signal conversion circuit 302, and the first interface 303. In addition, for ease of use, the first interface 303 is connected to the signal conversion circuit 302 through a cable. In this way, the adapter including the second interface 3021, the signal conversion circuit 302, and the first interface 303 may form a form of an adapter cable, and a length of the cable is not limited. In this way, it is more convenient for an operation and maintenance engineer to connect to the LMT device during use.

With reference to FIG. 10, the optical module 3011 generally includes a microprocessor (microcontroller unit, MCU), an optical signal digital signal processor (optical digital signal processor, ODSP+), an ADC, and an optical sub-assembly (optical sub-assembly, OSA). For example, the OSA may include a service receiver optical sub-assembly (receiver OSA, ROSA) and a bidirectional optical sub-assembly (bidirectional optical assembly, Bi-OSA+)/tri-directional optical sub-assembly (Tri-OSA), where the Bi-OSA+ and the Tri-OSA have optical signal transmission capabilities in at least two directions: sending and receiving (that is, integrating communication and sensing). The MCU and a peripheral circuit may be configured to implement a function of the pulse generator 101. The Bi-OSA+/Tri-OSA that integrates communication and sensing is configured to implement functions of the electrical-to-optical conversion module 102 and the optical-to-electrical conversion module 104. The ODSP+ may include the amplifier 105.

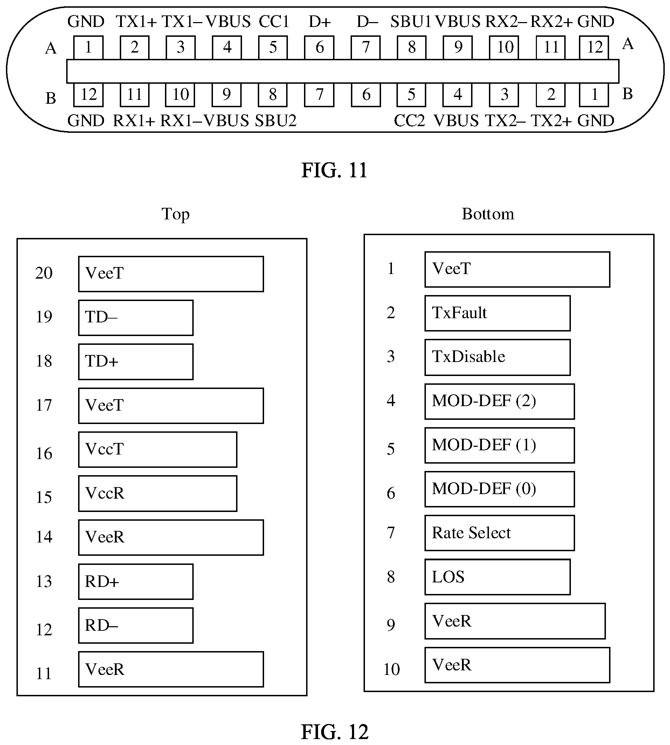

In an implementation, to implement connection between the electrical interface 3013 (also referred to as a gold finger) of the optical module 3011 and the USB interface 303 (namely, the first interface 303), for example, the USB interface 303 is a type-C interface. FIG. 11 provides an arrangement diagram of pins of the type-C interface. A surface A and a surface B of the type-C interface each include two VBUS pins, two GND pins, TX (TX1-, TX1+, TX2-, TX2+) pins, and RX (RX1-, RX1+, RX2-, RX2+) pins that are symmetrically disposed. A CC1 pin, an SBU1 pin, a D- pin, and a D+ pin are disposed on the surface A, and a CC2 pin and a SBU2 pin are disposed on the surface B.

The foregoing pins are used for the following purposes.

VBUS pin/GND pin: The VBUS pin/GND pin is a power pin, is a transmission line between a VBUS pin of a plug P1 and a VBUS pin of a plug P2, and is configured to transmit power.

RX pin/TX pin: The RX pin/TX pin is a high-speed signal pin, and the RX pin and the TX pin form a pin pair for transmitting data or audio/video signals. A transmission rate of a transmission line between an RX pin/TX pin of the plug P1 and an RX pin/TX pin of the plug P2 may reach 40 Gbps.

CC1 pin/CC2 pin: The CC1 pin/CC2 pin is a configuration base pin of a USB power delivery specification (power delivery specification, PD).

D+ pin/D- pin: The D+ pin and the D- pin form a pin pair for transmitting USB 2.0 data. A maximum transmission speed of a transmission line between a D+ pin/D- pin of the plug P1 and a D+ pin/D- pin of the plug P2 is 480 Mbps.

SBU1 pin/SBU2 pin: The SBU1 pin and the SBU2 pin form a pin pair for transmitting a sideband signal. A transmission line between a SBU1 pin/SBU2 pin of the plug P1 and a SBU1 pin/SBU2 pin of the plug P2 may transmit some control signals.

An SFP interface is used as an example of the electrical interface 3013 (or the second interface 3021). Refer to FIG. 12. The top (top) of the SFP interface includes a VeeT pin, a VeeR pin, a VccT pin, a VccR pin, a TD+ pin, a TD- pin, an RD+ pin, and an RD- pin. The bottom (bottom) of the SFP interface includes a VeeT pin, a VeeR pin, a TxFault pin, a TxDisable pin, an MOD-DEF(0) pin, an MOD-DEF(1) pin, an MOD-DEF(2) pin, a Rate Select pin, and an LOS pin.

The pins of the SFP interface are used for the following purposes.

The VeeT pin is configured to ground a transmission part.

The VeeR pin is configured to ground a receiving part.

The VccT pin is configured to power the transmission part.

The VccR pin is configured to power the receiving part.

The TD+ pin is used for a data input of the transmission part.

The TD- pin is used for a reverse-phase data input of the transmission part.

The RD+ pin is used for a data output of the receiving part.

The RD- pin is used for a reverse-phase data output of the receiving part.

The TxFault pin is configured to report an error in the transmission part.

The TxDisable pin is configured to turn off the transmission part at a high level or in a floating state.

The MOD-DEF(0) pin is a module definition pin, and is used for grounding.

The MOD-DEF(1) pin is a module definition pin, and is a clock line for I2C communication.

The MOD-DEF(2) pin is a module definition pin, and is a data line for I2C communication.

The Rate Select pin is used for rate selection.

The LOS pin is configured to provide an alarm of a loss of signal (loss of signal, LOS).

The signal conversion circuit 302 may connect the SFP interface shown in FIG. 12 and the type-C interface shown in FIG. 11, and convert a signal transmitted between the SFP interface and the type-C interface. For example, an electrical signal of a return optical signal is output through the RD+/RD- pin of the SFP interface. After converting the electrical signal of the return optical signal into a digital signal in a data format 01001100011101011010, the signal conversion circuit 302 may output the digital signal to the LMT through the D+/D- pin of the type-C interface. In addition, the LMT may further configure the optical module. A configuration signal may be transmitted from the D+/D- pin of the type-C interface to the TD+/TD- pin of the SFP interface through the signal conversion circuit 302.

In some examples, the signal conversion circuit 302 may alternatively be integrated with the optical fiber line detection component 301. For example, the signal conversion circuit 302 may alternatively be directly manufactured in the optical module 3011, so that the electrical interface 3013 and the second interface 3021 may be omitted.

In some examples, to adapt to a case in which optical fibers of different lengths and in different optical fiber modes can generate valid return optical signals after receiving probe optical signals, the optical fiber line detection component 301 is further configured to receive, through the signal conversion circuit 302, configuration information input by the electronic device from the first interface 303. The optical fiber line detection component 301 is further configured to control an optical parameter of the probe optical signal based on the configuration information, where the configuration information includes a pulse width, a distance, and a pulse coding mode. The pulse width relates to detection precision. A narrower pulse width indicates higher test precision. The distance is used to set an actual optical fiber distance. The pulse coding mode can be single pulse test or multi-pulse test. Precision of single pulse test is normal and a test periodicity is short. Precision of multi-pulse test is high and a test periodicity is long.

A specific application embodiment is provided.

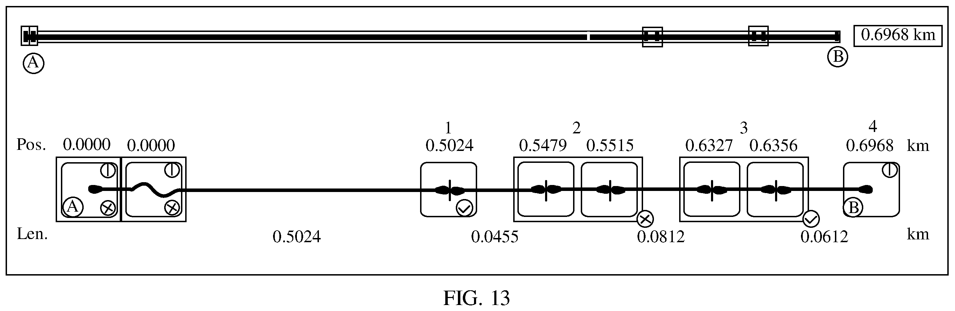

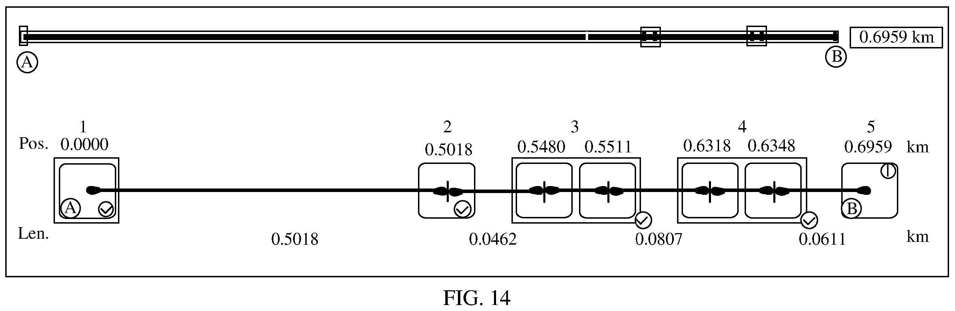

When a user plane or control plane service of an O-CU/O-DU of a base station is faulty, or a connection with an O-RU is faulty, alarm information is generated on a network management device of an operator, and a work order is dispatched to an operation and maintenance engineer by the network management device through an SMS message. The on-site operation and maintenance engineer needs to carry the foregoing optical fiber detection assembly (or when an optical module on the base station is reused as an optical fiber line detection component, the on-site operation and maintenance engineer may carry only the foregoing transfer cable (the SFP interface to the type-C interface)) and the foregoing LMT (mobile phone, PAD, laptop, or the like), proceed to a site at a work order location in the SMS message, find a corresponding optical interface, remove an optical fiber based on an operation requirement, and connect the optical fiber to the LMT (mobile phone, PAD, or laptop) through the conversion cable. A user interface of the LMT is started, a "XX application APP" selected and started, and configuration information is set. For example, the configuration information is at least one of the following information: a pulse width, a distance, and a pulse coding mode. In addition, the configuration information may further include a wavelength and an optical fiber mode (for example, a single-mode or multi-mode optical fiber). "Start test" is tapped. A specific test process is as follows: The optical fiber detection assembly sends a probe optical signal (where an optical parameter of the probe optical signal may be configured based on the foregoing configuration information) to the optical fiber through the optical fiber line detection component, and receives a return optical signal output by the optical fiber; the optical fiber line detection component outputs an electrical parameter of the return optical signal to a signal conversion circuit; and the signal conversion circuit converts the electrical parameter of the return optical signal into a digital signal, and outputs the digital signal to a first interface. After receiving the digital signal, the LMT implements, based on the digital signal provided by the optical fiber detection assembly, fronthaul optical fiber line sensing like a reflection point and an abnormal loss point location by using an algorithm like a noise reduction algorithm and a sensing enhancement algorithm, and can identify time based on empirical data and determine a specific abnormal event (for example, optical fiber breakage, cross-sectional area contamination, and optical device aging). Finally, after a progress bar ends, test is completed, and graphical display of fronthaul optical fiber line quality is implemented through the UI of the LMT. For a specific operation in the test process, refer to the descriptions in the foregoing example. Details are not described herein again. After test is completed, test results shown in FIG. 13 and FIG. 14 may be displayed on the UI.

Pos. represents an absolute location (a connection point between the optical interface of the optical module and the optical fiber is used as a location of a start point A, and an end point of the optical fiber is used as a location of an end point B), and len. represents a relative distance between two events. FIG. 13 is used as an example. Distances between nodes corresponding to Pos. are respectively 0.0000 km, 0.5024 km, 0.5479 km, 0.5515 km, 0.6327 km, 0.6356 km, and 0.6968 km, and len. corresponds to relative distances between events or devices represented by different nodes. For example, 0.5024 km is a difference between the first two nodes. For each node corresponding to Pos., a test result may be further displayed, for example, "×" is displayed on the node, to indicate that a return optical signal of an event or a device does not meet a test requirement. FIG. 14 is used as an example. Distances between nodes corresponding to Pos. are respectively 0.0000 km, 0.5018 km, 0.5480 km, 0.5511 km, 0.6318 km, 0.6348 km, and 0.6959 km, and len. corresponds to relative distances between events or devices represented by different nodes. For example, 0.5018 km is a difference between the first two nodes. For each node corresponding to Pos., a test result may be further displayed. For example, "√" is displayed on the node, to indicate that a return optical signal of an event or a device meets a test requirement.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An adapter, comprising a first interface, a signal conversion circuit, and a second interface, wherein the signal conversion circuit is connected to the first interface, the second interface is configured to connect to an optical module, and the second interface is further connected to the signal conversion circuit;
the second interface is configured to receive an electrical parameter of a return optical signal output by the optical module; and
the signal conversion circuit is configured to: convert the electrical parameter of the return optical signal into a digital signal, and output the digital signal to the first interface.

2. The adapter according to claim 1, wherein the second interface comprises a small form pluggable SFP interface.

3. The adapter according to claim 1 or 2, wherein the first interface comprises a universal serial bus USB interface or a wireless communication interface.

4. The adapter according to any one of claims 1 to 3, wherein the first interface is connected to the signal conversion circuit through a cable.

5. The adapter according to any one of claims 1 to 4, wherein
the signal conversion circuit is further configured to: receive configuration information input by the electronic device from the first interface, and send the configuration information to the optical module, wherein the configuration information is used to control an optical parameter of the probe optical signal output by the optical module, and the configuration information comprises at least one of the following information: a pulse width, a distance, and a pulse coding mode.

6. The adapter according to any one of claims 1 to 5, wherein the optical module is configured to connect to an optical fiber, and the optical module is specifically configured to: send the probe optical signal to the optical fiber, and receive the return optical signal output by the optical fiber; and the optical fiber is configured to connect a radio frequency unit RU and a baseband unit BU in an open radio access network ORAN.

7. An optical fiber detection assembly, comprising: an optical fiber line detection component, a signal conversion circuit, and a first interface, wherein the optical fiber line detection component is configured to connect to an optical fiber, the optical fiber line detection component is connected to the signal conversion circuit, and the signal conversion circuit is connected to the first interface;
the optical fiber line detection component is configured to: send a probe optical signal to the optical fiber, and receive a return optical signal output by the optical fiber;
the optical fiber line detection component is configured to output an electrical parameter of the return optical signal to the signal conversion circuit; and
the signal conversion circuit is configured to: convert the electrical parameter of the return optical signal into a digital signal, and output the digital signal to the first interface.

8. The optical fiber detection assembly according to claim 7, wherein the optical fiber line detection component comprises an optical module, and the optical module comprises an optical interface and an electrical interface;
the optical fiber detection assembly further comprises a second interface connected to the signal conversion circuit; and
the optical interface is configured to connect to the optical fiber, and the electrical interface is configured to connect to the signal conversion circuit through the second interface.

9. The optical fiber detection assembly according to claim 8, wherein the optical fiber detection assembly comprises an adapter, and the adapter comprises the second interface, the signal conversion circuit, and the first interface.

10. The optical fiber detection assembly according to claim 9, wherein the first interface is connected to the signal conversion circuit through a cable.

11. The optical fiber detection assembly according to any one of claims 8 to 10, wherein the second interface comprises an SFP interface.

12. The optical fiber detection assembly according to any one of claims 7 to 11, wherein the first interface comprises a USB interface or a wireless communication interface.

13. The optical fiber detection assembly according to any one of claims 7 to 12, wherein
the optical fiber line detection component is further configured to receive, through the signal conversion circuit, configuration information input by the electronic device from the first interface;
and
the optical fiber line detection component is further configured to control an optical parameter of the probe optical signal based on the configuration information, wherein the configuration information comprises at least one of the following information: a pulse width, a distance, and a pulse coding mode.

14. The optical fiber detection assembly according to any one of claims 7 to 13, wherein the optical fiber line detection component is integrated with the signal conversion circuit.

15. The optical fiber detection assembly according to any one of claims 7 to 14, wherein the optical fiber is configured to connect a radio frequency unit RU and a baseband unit BU in an open radio access network ORAN.

16. An optical fiber detection system, comprising an electronic device and the optical fiber detection assembly according to any one of claims 7 to 15, wherein
the electronic device is configured to: receive a digital signal output by the optical fiber detection assembly, and determine a fault on the optical fiber based on the data signal.

17. An optical fiber detection method, applied to an optical fiber detection assembly, wherein the optical fiber detection assembly comprises: an optical fiber line detection component, a signal conversion circuit, and a first interface, wherein the optical fiber line detection component is configured to connect to an optical fiber, the optical fiber line detection component is connected to the signal conversion circuit, and the signal conversion circuit is connected to the first interface; and
the optical fiber detection method comprises:
sending a probe optical signal to the optical fiber through the optical fiber line detection component, and receiving a return optical signal output by the optical fiber;
outputting an electrical parameter of the return optical signal to the signal conversion circuit through the optical fiber line detection component; and
converting the electrical parameter of the return optical signal into a digital signal through the signal conversion circuit, and outputting the digital signal to the first interface.

18. The optical fiber detection method according to claim 17, further comprising:
receiving configuration information input by the electronic device from the first interface;
and
controlling, based on the configuration information, an optical parameter of the probe optical signal output by the optical fiber line detection component, wherein the configuration information comprises at least one of the following information: a pulse width, a distance, and a pulse coding mode.
